# EUROPÄISCHE PATENTSCHRIFT

(11) **EP 1 675 546 B1**
(45) Veröffentlichungstag und Bekanntmachung des Hinweises auf die Patenterteilung: **24.04.2013**
(21) Anmeldenummer: 04789555.2
(22) Anmeldetag: 22.10.2004
(51) Int. Cl.: A61J 9/04, A61J 11/00

(54) **FLASCHE, INSBESONDERE BABYFLASCHE, SOWIE VERFAHREN ZUR HERSTELLUNG**
BOTTLE, IN PARTICULAR BABY'S BOTTLE AND PRODUCTION METHOD THEREFOR
BOUTEILLE, EN PARTICULIER BIBERON, ET PROCEDE DE PRODUCTION ASSOCIE

(30) Priorität: 23.10.2003 AT 16892003
(43) Veröffentlichungstag der Anmeldung: 05.07.2006
(73) Patentinhaber: Bamed AG, 8832 Wollerau (CH)
(72) Erfinder: RÖHRIG, Peter, A-1160 Wien (AT)
(74) Vertreter: Sonn & Partner Patentanwälte
(86) Internationale Anmeldenummer: PCT/AT2004/000366
(87) Internationale Veröffentlichungsnummer: WO 2005/041851

(56) Entgegenhaltungen:
- EP-A- 1 310 230
- WO-A2-03/041633
- DE-U- 8 704 733
- DE-U- 20 209 899
- FR-A- 2 640 875
- US-A- 6 142 325
- US-A1- 2002 108 925

## Beschreibung

Die Erfindung betrifft eine Flasche, insbesondere Babyflasche, mit einem beidseitig offenen Flaschenmantel, wobei an einem bodenseitigen Endbereich des Flaschenmantels eine Bodenkappe mit einem Lufteintrittsventil vorgesehen ist und der Flaschenmantel eine im Wesentlichen konische, sich von einem saugerseitigen Endbereich zu seinem bodenseitigen Endbereich erweiternde Form aufweist und zur Ausbildung des Lufteintrittsventils eine Membran in der Bodenkappe aufgenommen ist, wobei ein Befestigungsflansch der Membran zwischen der Stirnfläche des bodenseitigen Endbereichs und der Bodenkappe eingeklemmt ist, wobei in der Bodenkappe zumindest eine Lufteintrittsöffnung vorgesehen ist, sowie ein Verfahren zur Herstellung eines beidseitig offenen Flaschenmantels für eine Flasche gemäß einem der Ansprüche 1 bis 25.

Eine derartige Babyflasche mit einem beidseitig offenen Flaschenmantel, der eine sich allgemein erweiternde, konische Form aufweist, ist bereits aus der DE 87 04 733 U bekannt.

Weiter ist in der FR 2 640 875 A eine Babyflasche mit einem zylindrischen Flaschenmantel gezeigt, an dessen bodenseitigem Ende eine Bodenkappe, welche eine Membran trägt, aufgeschraubt ist.

Zudem ist aus der EP 1 310 230 A2 ein Sauger bekannt, bei welchem sich die Wandstärke im Schaftbereich graduell verjüngt, wobei jedoch in einem oberen Nippelbereich wiederum eine größere Wandstärke vorgesehen ist.

In der DE 202 09 899 U1 ist eine Babyflasche mit einem im Wesentlichen zylindrischen Flaschenkörper gezeigt, bei dem am oberen Ende ein Sauger mit Hilfe einer Überwurfkappe befestigt ist und am bodenseitigen Ende eine Bodenkappe mit einem Lufteintrittsventil vorgesehen ist.

Aus der US 6 142 325 A ist allgemein die Ausbildung eines Flaschenmantels aus Polypropylen bekannt. Hierbei ist eine sich in beiden Endbereichen verjüngende Flaschenform gezeigt, so dass lediglich eine Herstellung mittels Blasen in Betracht kommt.

Ebenso ist in der US 2002/0108925 A die Herstellung eines nicht beidseitig offenen Flaschenkörpers aus einem PES-Material mittels eines Blasverfahrens beschrieben.

Weiters ist eine Babyflasche mit einem beidseitig offenen Flaschenmantel bereits aus der US 5,499,729 A bekannt. Hierin ist eine Babyflasche geoffenbart, die aus einem zylindrischen Mantel besteht, wobei an einem offenen Ende eine Überwurfkappe zur Befestigung eines Saugers angeschraubt ist. In dem gegenüberliegenden Bodenbereich ist eine weitere Kappe zur klemmenden Befestigung einer Membran als elastomeres Ventilelement vorgesehen. In der Membran ist eine Vielzahl von Öffnungen vorgesehen, die in einem entspannten Zustand der Membran in ihrer Schließstellung vorliegen. Bei Aufbringen eines Unterdrucks im Behälterinneren werden die Öffnungen für einen Luftdurchtritt freigegeben. Der Bodenbereich der Babyflasche ist hierbei relativ klein ausgebildet, so dass auch das im Bodenbereich angeordnete Ventilelement nur eine vergleichsweise kleine Fläche aufweist. Der zylindrische Mantel besteht aus einem bei Babyflaschen üblichen Polycarbonat-Material, das mittels einem Blaseverfahren verformt wird.

Weiters ist ein Flaschenmantel, insbesondere für Babyflaschen, mit zwei offenen Enden, aus der US 6,142,325 A bekannt, wobei an einem bodenseitigen Endabschnitt eine Bodenkappe mit einem Ventilelement angeschraubt ist. Auch hier ist jedoch eine vergleichsweise kleine Bodenfläche und somit nur ein relativ kleines Ventilelement vorgesehen, so dass erst bei relativ großen Druckunterschieden ein Lufteintritt in das Innere der Babyflasche möglich ist. Der Flaschenmantel kann aus Glas, Polyester, Polyamiden, Polyolefinen, Polycarbonaten, und dergleichen bestehen.

Aus der US 6,053,342 A ist eine Babyflasche bekannt, bei der ein zylindrischer, abgewinkelter, beiderseits offener Flaschenmantel vorgesehen ist. Auch hierbei ist in einem Endbereich ein Sauger mittels einer Überwurfkappe befestigt und in in dem relativ kleinen gegenüberliegenden Bodenbereich eine Kappe mit einer elastischen Membran mit Luftdurchtrittsöffnungen vorgesehen, wobei die Membran über zumindest eine Lasche mit der Kappe verbunden ist. Der beidseitig offene Flaschenmantel wird mittels einem Blaseverfahren aus Polycarbonat hergestellt.

In der FR 647 873 A ist noch eine Babyflasche bekannt, die einen speziellen, einstückig mit dem Flaschenmantel ausgebildeten Trinkschnabel aufweist. Dieser spezielle Flaschenmantel, der eine konische Form aufweisen kann, ist bodenseitig offen ausgebildet, wobei an dem offenen Endabschnitt eine Befestigungsring angeschraubt ist, der eine Bodenfläche trägt. Um eine Korrosion zu vermeiden, besteht diese Bodenfläche vorzugsweise aus Aluminium.

Aus der US 4 613 050 A ist noch eine Babyflasche mit einem herkömmlichen becherförmigen Flaschenmantel bekannt, wobei ein spezielles Luftventil im Bereich der Schraubkappe vorgesehen ist, um einen Lufteintritt in die Babyflasche zu ermöglichen.

Die WO 03/041633 A zeigt einen Sauger zur Simulation von Form und Funktion einer weiblichen Brust, wobei der Sauger einen Flansch, eine daran anschließenden Basis mit einer Areolaregion und einen rund zulaufenden Nippel aufweist.

Die Nahrungsaufnahme von Babys mittels derartiger Babyflaschen unterscheidet sich bisher deutlich vom Trinken an der Mutterbrust. An der Mutterbrust wird der extrem weiche Nippel fast ausschließlich durch die Zunge und den Gaumen des Babys gemolken ("gestrippt") und da dabei keinerlei Unterdruck (Vakuum) in der Mutterbrust entsteht, ist ein vollkommen gleichmäßiges Trinken möglich. Insbesondere wird kein oder nur ein geringes Saugen (Vakuum) vom Baby selbst angewandt, um die Milch in den Mund zu bekommen und dann zu schlucken. Das Trinken entspricht praktisch dem Trinken aus einem Becher mit einer zusätzlichen Melkbewegung ("stripping").

Bei den bekannten Babyflaschen hingegen entsteht bereits mit dem ersten Trinken ein Unterdruck in der Flasche, dem das Baby entgegenwirkt, indem es ein stärkeres Vakuum (Saugen) erzeugt. Diese Art des Saugens führt dann dazu, dass aus dem Mundraum auch Luft angesaugt und geschluckt wird. Diese Luft führt dann zu den sehr unangenehmen und für Mutter und Kind extrem belastenden Koliken, unter denen sehr viele Babys ernsthaft leiden. Das Saugteil muss dabei obendrein verhältnismäßig steif und hart sein, damit es durch den Unterdruck der Flasche nicht in sich zusammenfällt und damit das Trinken unmöglich gemacht wird. Ein derartig steifes Saugteil lässt jedoch auch praktisch kein "stripping" (melken) zu, wodurch das Kind praktisch nur durch Saugen (Vakuum) zur Milch und auch zur ungewünschten Luft kommt.

Ziel der vorliegenden Erfindung ist nun eine Flasche der eingangs angeführten Art zu schaffen, durch welche die Nahrungsaufnahme über eine natürliche Mutterbrust möglichst gut simuliert wird.

Dies wird bei der Flasche der eingangs angeführten Art dadurch erzielt, dass die Membran zur Ausbildung des Lufteintrittsventils in Art eines Klappventils kreisringförmig ist, und dass an dem dem bodenseitigen Endbereich gegenüberliegenden saugerseitigen Endbereich ein Sauger befestigt ist, der einen Schaft und einen über einen Lippenanlagebereich daran anschließenden Nippel aufweist, wobei die Wandstärke des Schafts des Saugers größer ist als die Wandstärke des Saugers im Lippenanlagebereich und des Nippels.

Durch die im Wesentliche konische, sich zu seinem bodenseitigen Endbereich erweiternde Form des Flaschenmantels ergibt sich somit ein vergleichsweise großes, bodenseitiges Ventil, durch welches bereits ein Druckausgleich bei geringen Druckunterschieden ermöglicht wird. Da der Sauger zudem eine Wandstärke im Schaftbereich aufweist, die größer ist als die Wandstärke des Saugers im Lippenanlagebereich und des Nippels, kann das Saugen des Kindes an einer natürlichen Mutterbrust besonders gut simuliert werden. Durch die Ausbildung des Saugers mit unterschiedlichen Wandstärken ergibt sich ein vergleichsweise fester Ansatz durch den Schaft größerer Wandstärke, der den restlichen Sauger, nämlich den Lippenanlagebereich und den daran anschließenden Nippel, federnd trägt, so dass das Gefühl der Anlage an einer natürlichen Mutterbrust weitgehend nachgebildet wird.

Hinsichtlich eines zuverlässigen Lufteintritts über das Lufteintrittsventil der Bodenkappe ist zur Ausbildung des Lufteintrittsventils eine Membran in der Bodenkappe aufgenommen, wobei die Membran zur Ausbildung der Membran in Art eines Klappventils kreisringförmig ist und wobei zur sicheren Fixierung der Membran ein Befestigungsflansch der Membran zwischen der Stirnfläche des bodenseitigen Endbereichs und der Bodenkappe eingeklemmt ist. Obwohl zwar ein Lufteintritt ins Flascheninnere bereits über die Gewindeverbindung zwischen dem Flaschenmantel und der Bodenkappe möglich ist, ist in der Bodenkappe außerdem zumindest eine Lufteintrittsöffnung vorgesehen um einen Lufteintritt zu erleichtern.

Durch das erfindungsgemäße große und sensibel reagierende Lufteintrittsventil am Boden entsteht nun auch in der Flasche praktisch kein Unterdruck, so dass die Gefahr, dass der Sauger kollabiert nicht gegeben ist. Demzufolge kann der Sauger im Lippenanlagenbereich und im Bereich des Nippels entsprechend dünn ausgeführt werden, wodurch wiederum ein Melken ("stripping") ermöglicht wird. Das Baby kann also mit Melkbewegungen die Milch aus der Babyflasche bekommen und braucht nicht zu saugen. Durch diese konstruktive Wechselwirkung zwischen Bodenventil und Sauger wird nun der Bildung von Koliken vorgebeugt.

Aufgrund der vergleichsweise großen Bodenfläche ergibt sich zudem, dass die Babyflasche auf einfache Weise - ohne Flaschenbürste - gereinigt werden kann und demzufolge auch sehr gut für eine Reinigung in einer Geschirrspülmaschine geeignet ist.

Um die beiden offenen Enden des Flaschenmantels auf einfache Weise abschließen zu können, ist es günstig, wenn an die beiden offenen Enden des Flaschenmantels jeweils ein mit einem Gewinde zur Aufnahme einer Kappe versehener Endbereich anschließt.

Hinsichtlich einer einfachen und zuverlässigen Befestigung eines Saugers auf dem dem durchmessergrößeren bodenseitigen Endbereich gegenüberliegenden Ende des Flaschenmantels ist es von Vorteil, wenn an dem Endbereich mit dem geringeren Durchmesser ein Sauger mittels einer Überwurfkappe befestigt ist, wobei ein Saugerflansch zwischen der Überwurfkappe und einer Stirnfläche des Endbereichs durch Verschrauben der Überwurfkappe mit dem Flaschenmantel eingeklemmt ist.

Wie bereits vorstehend ausgeführt ist es günstig, wenn am bodenseitigen Endbereich des Flaschenmantels eine Bodenkappe mit einem Lufteintrittsventil angeschraubt ist, da durch die konische Ausgestaltung des Flaschenmantels eine vergleichsweise große Ventilfläche geboten wird, durch welche wiederum ein Lufteintritt bereits bei geringen Druckunterschieden - wie dies beim Saugen eines Kleinkindes an der Mutterbrust häufig auftritt - ermöglicht wird.

Hinsichtlich einer guten Abdichtung gegen einen Lufteintritt in der Schließstellung der Membran über die Gewindeverbindung zwischen der Kappe und dem Flaschenmantel, ist es von Vorteil, wenn die Membran eine der becherförmigen Ausgestaltung der Bodenkappe entsprechende Form aufweist.

Um einen Druckausgleich bereits bei geringsten Druckunterschieden zu gewährleisten, und somit das Enstehen eines Vakuums im Flascheninneren zu vermeiden, ist es günstig, wenn die Membran einen Innendurchmesser von mindestens 15 mm, vorteilhafterweise im Wesentlichen 30 mm, aufweist.

Hinsichtlich einer guten Abdichtung mittels der Membran in ihrer Schließstellung, insbesondere, wenn diese kreisringförmig ausgebildet ist, ist es günstig, wenn die Bodenkappe mit einer mittleren Erhebung kalottenförmig ausgebildet ist.

Wenn der innere Endabschnitt der kreisringförmigen Membran an der mittleren Erhebung der Bodenkappe anliegt, ergibt sich an der mittleren Erhebung eine ringförmige Dichtfläche der Membran in ihrer geschlossenen Stellung, welche durch ein Aufklappen der Membran beim Auftreten eines Unterdrucks in der Flasche freigegeben wird.

Um zuverlässig einen ungewollten Flüssigkeitsaustritt aus der Flasche zu verhindern sowie ein geringes Restvakuum in der Flasche nach dem Saugen beizubehalten, ist es günstig, wenn die Membran unter Vorspannung in die Bodenkappe eingesetzt ist.

Tests haben gezeigt, dass sich eine besonders gute Simulation einer natürlichen Mutterbrust ergibt, wenn der Schaft im Wesentlichen eine Wandstärke von 2,00 mm bis 2,50 mm, insbesondere von 2,25 mm, aufweist, und der Nippel bzw. der Lippenanlagebereich im Wesentlichen eine Wandstärke von 1,20 mm bis 1,50 mm, insbesondere von 1,35 mm, aufweist.

Um zudem das oben beschriebene "stripping" ("Melken") des Kindes an dem Sauger zu erleichtern, ist es weiters von Vorteil, wenn im Lippenanlagebereich zumindest eine Zone vorgesehen ist, deren Wandstärke geringer als die Wandstärke des übrigen Lippenanlagenbereichs ist. Hierbei haben wiederum Tests ergeben, dass es für das erwähnte "stripping" des Babys besonders vorteilhaft ist, wenn die Zone im Wesentlichen eine Wandstärke von 1,30 mm bis 1,60 mm, insbesondere von 1,45 mm, aufweist.

Wenn sich die Zone geringerer Wandstärke bis in den Nippel hinein erstreckt, ist die Zone geringerer Wandstärke in dem gesamten Anlagebereich des Kindermundes bzw. dessen Zunge vorgesehen, wodurch das "stripping" des Kindes weiter erleichtert wird. Hierbei ergibt sich zweckmäßigerweise, dass die Zone in Ansicht im Wesentlichen dreieckig ist.

Um ein unerwünschtes Zusammendrücken oder Zusammenfallen des Saugers im Bereich der Zonen geringerer Wandstärke zu vermeiden, ist es günstig, wenn die Zone geringerer Wandstärke durch zumindest eine Versteifungsrippe verstärkt ist.

Hierbei ist es, um unerwünschte Erhebungen an der Außenseite des Saugers zu vermeiden, bevorzugt, wenn die Versteifungsrippe im Bereich der Zone geringerer Wandstärke an der Innenseite des Saugers vorgesehen ist.

Dabei ist es insbesondere im Zusammenhang mit der bevorzugten Erstreckung der Zone dünnerer Wandstärke in den Nippel günstig, wenn sich die Versteifungsrippe bis in den Nippel hinein erstreckt.

Vorzugsweise weist der Nippel einen im Wesentlichen ovalen Querschnitt auf, wogegen der Schaft einen kreisförmigen Querschnitt aufweist. Dadurch kann der Sauger nur in zwei definierten Lagen vom Kind bequem in den Mund genommen werden, und dies führt auch dazu, dass dann die Zonen geringerer Wandstärke an genau definierten Stellen am Sauger vorgesehen werden können. Demgemäß ist es weiters günstig, wenn zwei einander diametral gegenüberliegende Zonen geringerer Wandstärke vorgesehen sind. Weiters ist es in diesem Zusammenhang günstig, wenn die zwei Zonen geringerer Wandstärke im Bereich der flacheren Seiten des Nippels angeordnet sind.

Um weiters eine möglichst gute Nachbildung der Mutterbrust auch hinsichtlich der Oberflächenbeschaffenheit zu schaffen, ist es von Vorteil, wenn die Saugeroberfläche im Lippenanlagenbereich bzw. die Saugeroberfläche des Nippels, insbesondere die Zone bzw. die Zonen geringerer Wandstärke, zumindest teilweise eine erhöhte Oberflächenrauigkeit von maximal 100 µm, insbesondere maximal 50 µm, aufweist. Tests haben insbesondere ergeben, dass nicht nur ein optisch weiches und hautähnliches Aussehen vermittelt wird, sondern sich der Sauger zudem einer Mutterbrust besonders ähnlich anfühlt, wenn eine Oberflächenrauigkeit von etwa 10 µm bis etwa 40 µm, vorzugsweise 15 µm bis 30 µm, vorgesehen ist.

Bevorzugt wird der Sauger als Spritzgussteil vorgesehen, wobei dann die oberflächenrauen Zonen der Sauger durch entsprechend raue Bereiche in der Spritzgussform hergestellt werden. Diese rauen Bereiche können beispielsweise durch Funkenerosion oder durch chemisches Ätzen der Formflächen der Spritzgussform hergestellt werden.

Es sei noch erwähnt, dass heutzutage ein wesentliches Problem darin zu sehen ist, dass einerseits aus gesundheitlichen Gründen das Stillen des Kindes und damit die Ernährung mit Muttermilch für die ersten 6 Monate fast Pflicht ist, andererseits Mütter in vielen Fällen den Kindern nicht alle 4-6 Stunden die Brust geben können, da sie nicht in der Nähe des Kindes sind. Insbesondere in den USA müssen die Mütter üblicherweise bereits 6 Wochen nach der Geburt wieder zur Arbeit erscheinen.

Nun versuchen die Mütter mit Brustpumpen Milch abzupumpen, die dann während ihrer Abwesenheit den Kindern von jemand anderem in der Flasche verabreicht wird. Die Kinder müssen nun praktisch täglich zwischen Flaschensauger und Mutterbrust hin- und herwechseln, was bei vielen dieser wenige Wochen alten Kinder sehr häufig zu großen Problemen führt. In den meisten Fällen muss die Mutter abstillen und das Kind mit künstlicher Nahrung füttern. Dies ist aus medizinischer Sicht absolut unerwünscht. Die amerikanischen Kinderärzte empfehlen sogar offiziell, die Kinder bis zum 1. Geburtstag zu stillen, was auf ungeheure technische Probleme stößt, wie oben bereits erwähnt. Es wird zwar versucht, durch eine möglichst kleine Saugöffnung beim Flaschensauger das Kind an dieselbe Saug- und Arbeitsleistung zu gewöhnen wie an der Mutterbrust, was sich jedoch in vielen Fällen als ungenügend herausstellt. Sowohl der "Geschmack" als auch die Klebrigkeit von Gummi- oder Silikonsaugern sind völlig anders als das Gefühl, das für das Kind an der Mutterbrust entsteht. Auch die Art, die Milch aus dem Flaschensauger zu saugen, ist völlig anders als die Trinkbewegung an der Mutterbrust.

Durch die im Einzelnen hier angeführten Wandstärkenveränderungen, die Oberflächengestaltung durch Rauigkeit und die spezielle Abstimmung dieser Eigenschaften in Verbindung mit dem angegebenen bodenseitigen Lufteintrittsventil wird nun ein großer Schritt in Richtung "Mutterbrust" gemacht und den Müttern eine wesentlich längere Stillzeit ermöglicht.

Vorzugsweise besteht der Sauger aus einem thermoplastischen Elastomer oder aus Silikon, Latex oder dergl. Elastomer-Material.

Das Verfahren der eingangs angegebenen Art ist dadurch gekennzeichnet, dass der Flaschenmantel aus Polyolefin, insbesondere Polypropylen, gespritzt wird.

Bisher werden vorwiegend Polycarbonat-Flaschen eingesetzt, die jedoch den Nachteil auf, dass das Material relativ teuer ist und zudem die Herstellung mittels Spritzstreckblasen relativ aufwendig ist.

Andererseits sind auch hohlkörpergeblasene Flaschen aus Polypropylen bekannt. Nachteilig ist hierbei jedoch, dass diese Flaschen - sollten sie nach dem Gebrauch zu ihrer Säuberung ausgekocht werden - aufgrund des sog. Memory-Effekts um ca. 5% schrumpfen, so dass eine auf dem Mantel angebrachte Skalierung verfälscht wird. Um dem entgegen zu wirken müssen diese hohlkörpergeblasenen Flaschen in einem zweiten Herstellungsschritt gereckt werden. Bei der Herstellung des Flaschenmantels aus Polyolefin, insbesondere Polypropylen, in einem Spritzverfahren kann somit ein vergleichsweise kostengünstiger Flaschenmantel für eine Babyflasche hergstellt werden, der nicht in einem weiteren Herstellungsschritt nachbehandelt werden muss.

Um auf einfache Weise eine große Bodenfläche und somit zugleich eine große Ventilfläche zu erzeugen, ist es günstig, wenn zur Ausbildung eines konischen Flaschenmantels der Flaschenmantel mit Hilfe einer kegelstumpfförmigen Spritzgussform hergestellt wird. Durch die kegelstumpfförmige Ausbildung der Spritzgussform ergibt sich auch ein einfaches Entformen des Flaschenmantels, da der Flaschenmantel in Richtung des kleineren Durchmessers von der Spritzgussform auf einfache Weise entnommen werden kann.

Um eine Einsicht auf den Inhalt der Flasche zu ermöglichen, ist es von Vorteil, wenn der Flaschenmantel aus durchsichtigem Polypropylen, insbesondere aus so genanntem Random-Copolymere-Polypropylen, Metallocen-katalysiertem-Polypropylen oder dergl., gespritzt wird.

Die Erfindung wird nachstehend anhand von einem in der Zeichnung dargestellten bevorzugten Ausführungsbeispiel, auf das sie jedoch nicht beschränkt sein soll, noch weiter erläutert. Im Einzelnen zeigen in der Zeichnung:
Fig. 1 einen Schnitt der Babyflasche mit einem konischen Flaschenmantel aus Polypropylen;
Fig. 2 eine perspektivische Ansicht der Bodenkappe;
Fig. 3 einen Schnitt einer Membran eines bodenseitigen Luftventils;
Fig. 4 einen Schnitt der Bodenkappe mit der eingesetzten Membran;
Fig. 5 eine perspektivische Ansicht eines Saugers mit einer Zone geringerer Wandstärke;
Fig. 6 einen Schnitt gemäß der Linie VI-VI in Fig. 5; und
Fig. 7 einen Schnitt gemäß der Linie VII-VII in Fig. 5.

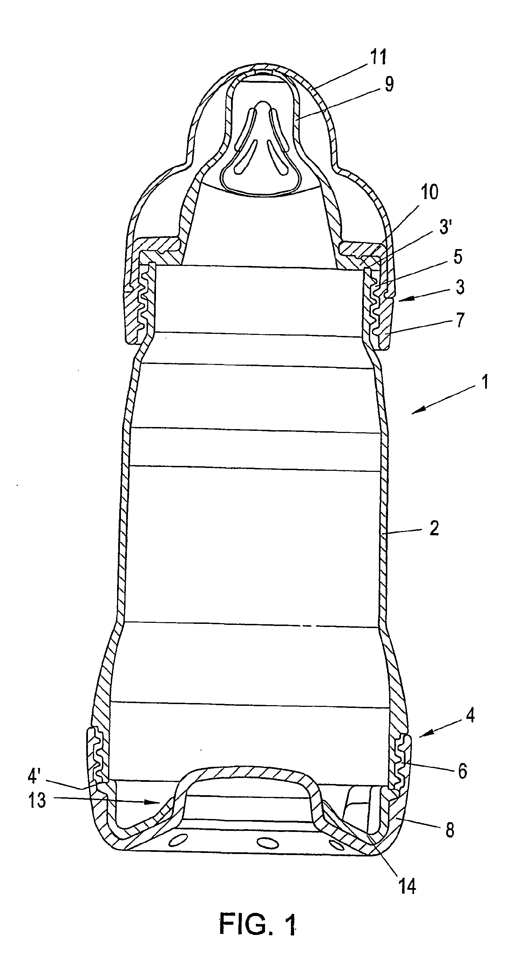

In Fig. 1 ist eine Babyflasche 1 mit einem konischen Flaschenmantel 2 gezeigt, der in seinen beiden Endbereichen 3, 4 jeweils offen ist und mit einem Gewinde 5, 6 zur Befestigung einer Überwurfkappe 7 bzw. einer Bodenkappe 8 versehen ist.

Der Flaschenmantel 2 besteht hierbei aus einem Polypropylen-Material und wird mittels eines Spritzgussverfahrens geformt, so dass auf einfache Weise die konische Form des Flaschenmantels 2 mit Hilfe einer konischen Spritzgussform hergestellt werden kann. Das Entformen des spritzgegossenen Flaschenmantels 2 aus Polypropylen kann hierbei auf einfache Weise durch Herabziehen des Flaschenmantels 2 von der konischen Spritzgussform (nicht gezeigt) in Richtung des kleineren Durchmessers der Spritzgussform erfolgen.

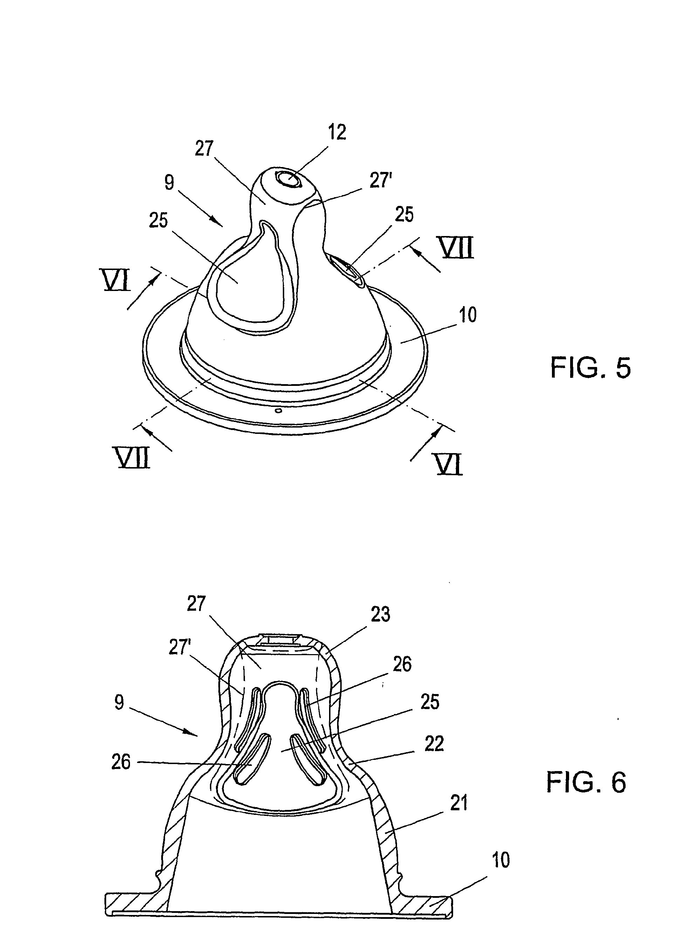

In dem oberen, durchmesserkleineren Endbereich 3 ist ein Sauger 9 mit Hilfe der Überwurfkappe 7 befestigt, wobei hierzu ein Saugerflansch 10 zwischen der Überwurfkappe 7 und der Stirnseite 3' des oberen Endbereichs 3 eingeklemmt wird. Um einen Austritt von Flüssigkeit aus der Flasche 1 im nicht gebrauchten Zustand zu vermeiden, ist auf der Überwurfkappe 7 eine Schutzkappe 11 aufgesetzt, die in der in Fig. 1 gezeigten Position eine Flüssigkeitsaustrittsöffnung 12 des Saugers 9 (vgl. Fig. 5) abdeckt, indem die Schutzkappe 11 den Sauger 9 in ihrer aufgesetzten Position geringfügig nach unten drückt.

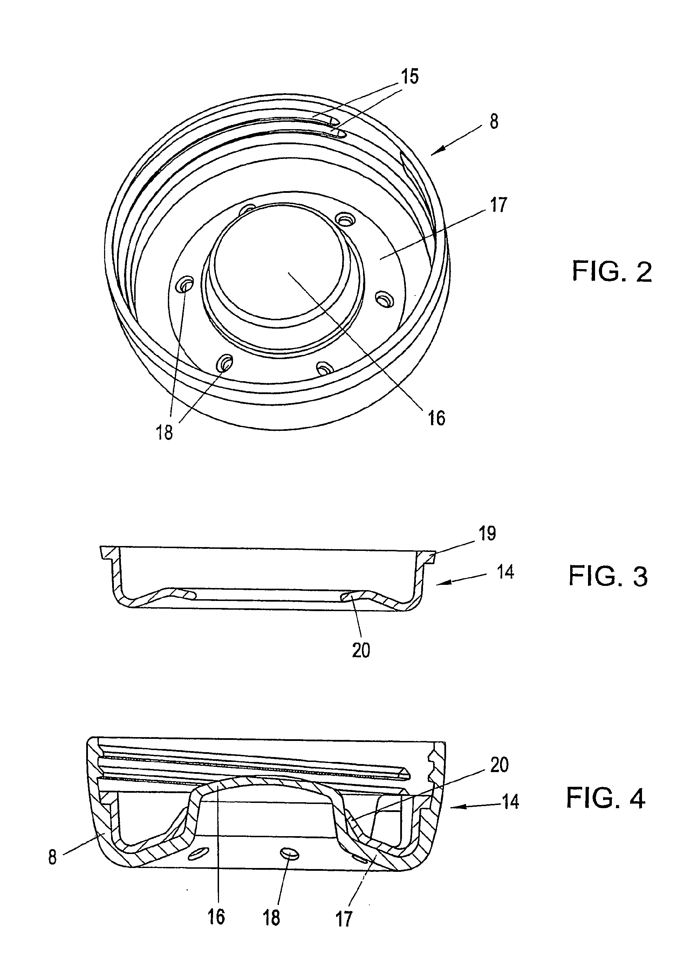

Auf den durchmessergrößeren, bodenseitigen Endbereich 4 ist die Bodenkappe 8 mit einem Lufteintrittsventil 13 über das Gewinde 6 angeschraubt. Das Lufteintrittsventil 13 setzt sich im Wesentlichen aus der Bodenkappe 8 und einer in der Bodenkappe 8 eingesetzten Membran 14 zusammen, wie dies insbesondere auch aus den Fig. 2-4 ersichtlich ist. Die becherförmige Bodenkappe 8 ist hierbei mit einem Innengewinde 15 zum Verschrauben mit dem Ausßengewinde 6 des Flaschenmantels 2 versehen, und weist eine mittlere Erhebung 16 auf, die als Anlagefläche für die Membran 14 vorgesehen ist.

Wie insbesondere in Fig. 2 ersichtlich, sind in der kreisringförmigen Bodenfläche 17 der Bodenkappe 8 über den Umfang verteilt mehrere Lufteintrittsöffnungen 18 vorgesehen, wodurch ein Druckausgleich zwischen dem beim Saugen im Inneren der Flasche 1 auftretenden Unterdruck und der Umgebung bereits bei geringen Druckunterschieden erleichtert wird. Alternativ ist jedoch auch eine Ausführung ohne den Lufteintrittsöffnungen 18 möglich, bei welcher lediglich ein Lufteintritt über die Gewindeverbindung 6, 15 erfolgt.

Wie aus Fig. 3 ersichtlich, weist die Membran 14 eine im Wesentlichen der Becherform der Bodenkappe 8 entsprechende Form auf und ist mit einem Befestigungsflansch 19 versehen, der zwischen der Bodenkappe 8 und einer Stirnfläche 4' des offenen Endbereichs 4 zur Befestigung der Membran 14 eingeklemmt wird. Die Membran 14 ist zudem kreisringförmig ausgebildet, wobei im inneren Endbereich eine Dichtlippe 20 vorgesehen ist, die entgegen dem der Bodenkappe 8 angepassten Verlauf der Membran 14 abgewinkelt ist.

Wie insbesondere aus Fig. 4 ersichtlich, wird die Membran 14 unter Vorspannung der Dichtlippe 20 in die Bodenkappe 8 eingesetzt, wodurch ein geringes Vakuum in der Flasche 1 nach dem Saugen verbleibt.

Zum Druckausgleich kann somit Luft über die Lufteintrittsöffnungen 18 bzw. die Gewindeverbindung 6, 15, eintreten, und darauffolgend über ein Abheben der Dichtlippe 20 von der mittleren Erhebung 16 der Bodenkappe 8 ins Innere der Flasche 1 gelangen.

In den Fig. 5-7 ist noch der in Fig. 1 ersichtliche Sauger 9 im Detail gezeigt, der insbesondere im Zusammenspiel mit dem Bodenventil 13, welches einen Druckausgleich bereits bei geringen Druckunterschieden zulässt, ein Saugen bzw. ein "stripping" des Kindes ermöglicht, welches ein Saugen an einer Mutterbrust gut nachahmt.

Hierfür weist der Schaft 21 des Saugers 9 eine größere Wandstärke als ein daran anschließender Lippenanlagebereich 22 sowie ein daran angrenzender Nippel 23 auf. Hierdurch ergibt sich eine in Pfeilrichtung 24 wirkende Federkraft des Schafts 21, der den Lippenanlagebereich 22 sowie den Nippel 23 mit geringerer Wandstärke trägt.

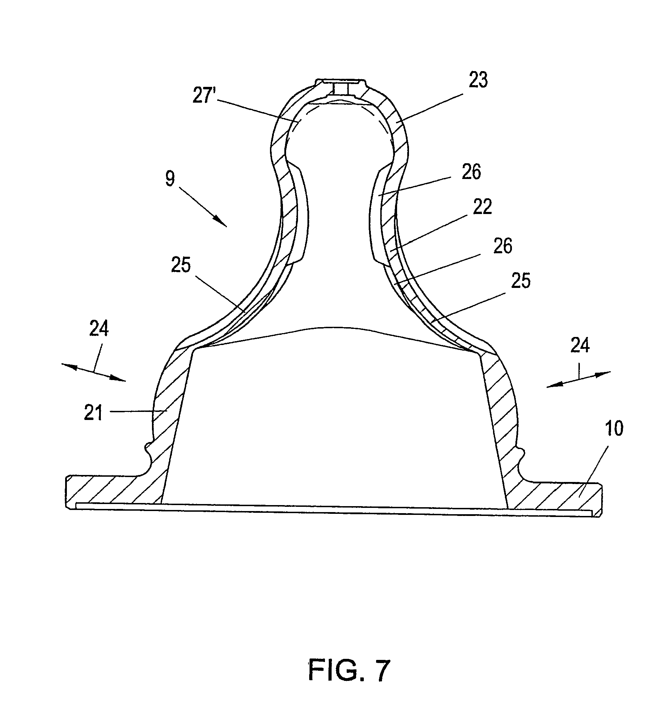

Um das "stripping" des Kindes weiter zu erleichtern und das Saugen an einer Mutterbrust zu simulieren, sind im Lippenanlagebereich 22 zwei Zonen 25 vorgesehen, die - wie insbesondere aus Fig. 7 ersichtlich - eine gegenüber dem übrigen Lippenanlagebereich weiter verdünnte Wandstärke aufweisen.

Der Sauger 9 ist im Bereich seines Schafts 21 hierbei rotationssymmetrisch ausgebildet, d.h. im Querschnitt kreisrund, jedoch ist der Nippel 23 im Querschnitt oval, so dass er nur in zwei Positionen, nämlich mit der längeren Achse in Querrichtung von einem Kleinkind bequem in den Mund genommen werden kann. Die Querschnittsform geht im Lippenanlagenbereich 22 von der ovalen Form des Nippels 23 in die Kreisform des Schafts 21 über, wodurch die Form des Nippels möglichst weitgehend der natürlichen Form der Brustwarze entspricht, während ein Baby an der Brustwarze saugt bzw. melkt.

Die beiden Zonen 25 geringerer Wandstärke sind hierbei an den beiden Breitseiten des Saugers 9, d.h. also an jenen Seiten, die sich parallel zur längeren Achse des ovalen Querschnitts des Nippels 23 erstrecken, einander diametral gegenüberliegend angeordnet und in Ansicht ungefähr dreieckig ausgebildet, so dass sie sich mit ihrem breiten Basisbereich im Lippenanlagenbereich 22 und mit ihrem schmäleren Spitzenbereich bis in den Nippel 23 erstrecken.

An der Innenseite jeder Zone 25 sind vier Versteifungsrippen 26 vorgesehen, um die Festigkeit des Saugers 9, insbesondere in den Zonen 25 geringerer Wandstärke zu erhöhen, so dass es auch beim Einsatz von weichen Materialien für den Sauger 9 zu keinem ungewollt starken Eindrücken des Saugers 9 im Lippenanlagenbereich kommt. Durch die Versteifungsrippen 26 wird somit ein Zusammenfallen des Saugers, wodurch das Nachfließen von Trinkflüssigkeit, insbesondere Milch, blockiert werden würde, zuverlässig vermieden.

Zudem kann im Lippenanlagenbereich 22 sowie am Nippel 23 die Oberfläche des Saugers 9 eine gegenüber dem restlichen Sauger 9 höhere Oberflächenrauigkeit aufweisen, so dass die Beschaffenheit der Mutterbrust noch besser simuliert werden kann. Bei dem in den Fig. 5-7 gezeigten Sauger ist hierbei ein Bereich 27, der von der Konturlinie 27' umgeben ist, mit einer erhöhten Oberflächenrauigkeit von maximal ungefähr 100 µm, insbesondere maximal 50 µm, versehen, wobei Tests gezeigt haben, dass eine optimale Rautiefe, die zwischen 10 µm und 40 µm, bevorzugt zwischen 15 µm und 30 µm, liegt, von Kleinkindern besonders gut angenommen wird.

Mit der erfindungsgemäßen Babyflasche wird somit erstmals eine kostengünstige und einfach herzustellende Babyflasche geschaffen, die ein Bodenventil aufweist, das bereits bei geringen Druckunterschieden einen Druckausgleich ermöglicht, wobei durch den Druckausgleich bei geringen Druckunterschieden im Zusammenspiel mit einem Sauger, der aufgrund unterschiedlicher Wandstärken die Mutterbrust besonders gut simuliert, mit Hilfe der erfindungsgemäßen Babyflasche eine Nahrungsaufnahme über die Mutterbrust besonders gut nachgeahmt werden kann.

## Patentansprüche

1. Flasche (1), insbesondere Babyflasche, mit einem beidseitig offenen Flaschenmantel (2), wobei an einem bodenseitigen Endbereich (4) des Flaschenmantels (2) eine Bodenkappe (8) mit einem Lufteintrittsventil (13) vorgesehen ist und der Flaschenmantel (2) eine im Wesentlichen konische, sich von einem saugerseitigen Endbereich zu seinem bodenseitigen Endbereich (4) erweiternde Form aufweist und zur Ausbildung des Lufteintrittsventils (13) eine Membran (14) in der Bodenkappe (8) aufgenommen ist, wobei ein Befestigungsflansch (19) der Membran (14) zwischen der Stirnfläche (4') des bodenseitigen Endbereichs (4) und der Bodenkappe (8) eingeklemmt ist, wobei in der Bodenkappe (8) zumindest eine Lufteintrittsöffnung (18) vorgesehen ist, **dadurch gekennzeichnet, dass** die Membran (14) zur Ausbildung des Lufteintrittsventils (13) in Art eines Klappventils kreisringförmig ist, und dass an dem dem bodenseitigen Endbereich gegenüberliegenden saugerseitigen Endbereich ein Sauger (9) befestigt ist, der einen Schaft (21) und einen über einen Lippenanlagebereich (22) daran anschließenden Nippel (23) aufweist, wobei die Wandstärke des Schafts (21) des Saugers (9) größer ist als die Wandstärke des Saugers (9) im Lippenanlagebereich (22) und des Nippels (23).

2. Flasche nach Anspruch 1 oder 2, **dadurch gekennzeichnet, dass** an die beiden offenen Enden des Flaschenmantels (2) jeweils ein mit einem Gewinde (5, 6) zur Aufnahme einer Kappe (7, 8) versehener Endbereich (3, 4) anschließt.

3. Flasche nach Anspruch 2, **dadurch gekennzeichnet, dass** an dem Endbereich (3) mit dem geringeren Durchmesser ein Sauger (9) mittels einer Überwurfkappe (7) befestigt ist, wobei ein Saugerflansch (10) zwischen der Überwurfkappe (7) und einer Stirnfläche (3') des Endbereichs (3) durch Verschrauben der Überwurfkappe (7) mit dem Flaschenmantel (2) eingeklemmt ist.

4. Flasche nach Anspruch 2 oder 3, **dadurch gekennzeichnet, dass** am bodenseitigen Endbereich (4) des Flaschenmantels (2) eine Bodenkappe (8) mit einem Lufteintrittsventil (13) angeschraubt ist.

5. Flasche nach einem der Ansprüche 1 bis 4, **dadurch gekennzeichnet, dass** die Membran (14) eine der becherförmigen Ausgestaltung der Bodenkappe (8) entsprechende Form aufweist.

6. Flasche nach einem der Ansprüche 1 bis 5, **dadurch gekennzeichnet, dass** die Membran (14) einen Innendurchmesser von mindestens 15 mm, vorteilhafterweise im Wesentlichen 30 mm, aufweist.

7. Flasche nach einem der Ansprüche 1 bis 6, **dadurch gekennzeichnet, dass** die Bodenkappe (8) mit einer mittleren Erhebung (16) kalottenförmig ausgebildet ist.

8. Flasche nach einem der Ansprüche 1 bis 7, dadurch gekennezeichnet, dass der innere Endabschnitt (20) der kreisringförmigen Membran (14) an der mittleren Erhebung (16) der Bodenkappe (8) anliegt.

9. Flasche nach einem der Ansprüche 1 bis 8, **dadurch gekennzeichnet, dass** die Membran (14) unter Vorspannung in die Bodenkappe (8) eingesetzt ist.

10. Flasche nach einem der Ansprüche 1 bis 9, **dadurch gekennzeichnet, dass** der Schaft (21) im Wesentlichen eine Wandstärke von 2,00 mm bis 2,50 mm, insbesondere von 2,25 mm, aufweist, und der Nippel (23) bzw. der Lippenanlagebereich (22) im Wesentlichen eine Wandstärke von 1,20 mm bis 1,50 mm, insbesondere von 1,35 mm, aufweist.

11. Flasche nach einem der Ansprüche 1 bis 10 **dadurch gekennzeichnet, dass** im Lippenanlagebereich (22) zumindest eine Zone (25) vorgesehen ist, deren Wandstärke geringer als die Wandstärke des übrigen Lippenanlagenbereichs (22) ist.

12. Flasche nach Anspruch 11, **dadurch gekennzeichnet, dass** die Zone (25) im Wesentlichen eine Wandstärke von 1,30 mm bis 1,60 mm, insbesondere von 1,45 mm, aufweist.

13. Flasche nach Anspruch 11 oder 12, **dadurch gekennzeichnet, dass** sich die Zone (25) geringerer Wandstärke bis in den Nippel (23) hinein erstreckt.

14. Flasche nach Anspruch 13, **dadurch gekennzeichnet, dass** die Zone (25) in Ansicht im Wesentlichen dreieckig ist.

15. Flasche nach einem der Ansprüche 11 bis 14, **dadurch gekennzeichnet, dass** die Zone (25) geringerer Wandstärke durch zumindest eine Versteifungsrippe (26) verstärkt ist.

16. Flasche nach Anspruch 15, **dadurch gekennzeichnet, dass** die Versteifungsrippe (26) im Bereich der Zone (25) geringerer Wandstärke an der Innenseite des Saugers (9) vorgesehen ist.

17. Flasche nach Anspruch 15 oder 16, **dadurch gekennzeichnet, dass** sich die Versteifungsrippe (26) bis in den Nippel (23) hinein erstreckt.

18. Flasche nach einem der Ansprüche 1 bis 17, **dadurch gekennzeichnet, dass** der Nippel (23) einen im Wesentlichen ovalen Querschnitt aufweist, wogegen der Schaft (22) einen kreisförmigen Querschnitt aufweist.

19. Flasche nach einem der Ansprüche 11 bis 18 **dadurch gekennzeichnet, dass** zwei einander diametral gegenüberliegende Zonen (25) geringerer Wandstärke vorgesehen sind.

20. Flasche nach Anspruch 19, **dadurch gekennzeichnet, dass** die zwei Zonen (25) geringerer Wandstärke im Bereich der flacheren Seiten des Nippels (9) angeordnet sind.

21. Flasche nach einem der Ansprüche 11 bis 20, dadurch gekennezeichnet, dass die Saugeroberfläche im Lippenanlagenbereich (22) bzw. die Saugeroberfläche des Nippels (23), insbesondere die Zone bzw. die Zonen (25) geringerer Wandstärke, zumindest teilweise eine erhöhte Oberflächenrauigkeit von maximal 100 µm, insbesondere maximal 50 µm, aufweist.

22. Flasche nach Anspruch 21, **dadurch gekennzeichnet, dass** eine Oberflächenrauigkeit von etwa 10 µm bis etwa 40 µm, vorzugsweise 15 µm bis 30 µm, vorgesehen ist.

23. Flasche nach einem der Ansprüche 1 bis 22, **dadurch gekennzeichnet, dass** der Sauger (9) ein Spritzgussteil ist.

24. Flasche nach einem der Ansprüche 1 bis 23, **dadurch gekennzeichnet, dass** der Sauger (9) aus einem thermoplastischen Elastomer besteht.

25. Flasche nach einem der Ansprüche 1 bis 23, **dadurch gekennzeichnet, dass** der Sauger (9) aus Latex, Silikon oder dergl. Elastomermaterial besteht.

26. Verfahren zur Herstellung eines beidseitig offenen Flaschenmantels (2) für eine Flasche gemäss einem der Ansprüche 1 bis 25, **dadurch gekennzeichnet, dass** der Flaschenmantel (2) aus Polyolefin, insbesondere Polypropylen, gespritzt wird.

27. Verfahren nach Anspruch 26, **dadurch gekennzeichnet, dass** zur Ausbildung des im Wesentlichen konischen Flaschenmantels (2) der Flaschenmantel (2) mit Hilfe einer kegelstumpfförmigen Spritzgussform hergestellt wird.

28. Verfahren nach Anspruch 26 oder 27, **dadurch gekennzeichnet, dass** der Flaschenmantel (2) aus durchsichtigem Polypropylen, insbesondere aus so genanntem Random-Copolymere-Polypropylen, Metallocen-katalysiertem-Polypropylen oder dergl., gespritzt wird.

## Claims

1. A bottle (1), in particular a baby bottle, comprising a bottle jacket (2) open on both sides, wherein a base cap (8) including an air intake valve (13) is provided at a bottom-sided end region (4) of the bottle jacket (2) and the bottle jacket (2) has a substantially conical shape widening from a teat-sided end region to its bottom-sided end region (4), and for forming the air intake valve (13) a diaphragm (14) is received in the base cap (8), wherein a fastening flange (19) of the diaphragm (14) is clamped between the front face (4') of the bottom-sided end region (4) and the base cap (8), wherein at least one air intake opening (18) is provided in the base cap (8), **characterized in that** for forming the air intake valve (13) in the form of a flap valve the diaphragm (14) is circular-ring-shaped, and that a teat (9) is fastened to the teat-sided end region opposite the bottom-sided end region, which teat (9) comprises a shaft (21) and a nipple (23) following said shaft (21) via a lip-contacting region (22), wherein the wall thickness of the shaft (21) of the teat (9) is thicker than the wall thickness of the teat (9) in the lip-contacting region (22) and of the nipple (23).

2. The bottle according to claim 1, **characterized in that** end regions (3, 4), each provided with a thread (5, 6) for receiving a cap (7, 8), adjoin the two open ends of the bottle jacket (2).

3. The bottle according to claim 2, **characterized in that** a teat (9) is fastened by means of a sleeve cap (7) to the end region (3) having the smaller diameter, a teat flange (10) being clamped between the sleeve cap (7) and a front face (3') of the end region (3) by screwing engagement of the sleeve cap (7) with the bottle jacket (2).

4. The bottle according to claim 2 or 3, **characterized in that** a base cap (8) having an air intake valve (13) is screwed to the bottom-sided end region (4) of the bottle jacket (2).

5. The bottle according to any one of claims 1 to 4, **characterized in that** the diaphragm (14) has a shape corresponding to the cup-shaped design of the base cap (8).

6. The bottle according to any one of claims 1 to 5, **characterized in that** the diaphragm (14) has an inner diameter of at least 15 mm, preferably of substantially 30 mm.

7. The bottle according to any one of claims 1 to 6, **characterized in that** the base cap (8) is designed calotte-shaped with a central elevated portion (16).

8. The bottle according to any one of claims 1 to 7, **characterized in that** the inner end portion (20) of the circular-ring-shaped diaphragm (14) abuts on the central elevated portion (16) of the base cap (8).

9. The bottle according to any one of claims 1 to 8, **characterized in that** the diaphragm (14) is inserted into the base cap (8) in a pre-stressed state.

10. The bottle according to any one of claims 1 to 9, **characterized in that** the shaft (21) has a wall thickness of substantially 2.00 mm to 2.50 mm, in particular of 2.25 mm, and the nipple (23) and/or the lip-contacting region (22) has a wall thickness of substantially 1.20 mm to 1.50 mm, in particular of 1.35 mm.

11. The bottle according to any one of claims 1 to 10, **characterized in that** in the lip-contacting region (22) at least one zone (25) is provided, the wall thickness of which is thinner than the wall thickness of the remaining lip-contacting region (22).

12. The bottle according to claim 11, **characterized in that** the zone (25) has a wall thickness of substantially 1.30 mm to 1.60 mm, in particular of 1.45 mm.

13. The bottle according to claim 11 or 12, **characterized in that** the zone (25) of reduced wall thickness extends as far as into the nipple (23).

14. The bottle according to claim 13, **characterized in that** the zone (25) is substantially triangular in elevational view.

15. The bottle according to any one of claims 11 to 14, **characterized in that** the zone (25) of reduced wall thickness is reinforced by at least one stiffening rib (26).

16. The bottle according to claim 15, **characterized in that** the stiffening rib (26) in the region of the zone (25) of reduced wall thickness is provided on the inner side of the teat (9).

17. The bottle according to claim 15 or 16, **characterized in that** the stiffening rib (26) extends as far as into the nipple (23).

18. The bottle according to any one of claims 1 to 17, **characterized in that** the nipple (23) has a substantially oval cross-section, whereas the shaft (22) has a circular cross-section.

19. The bottle according to any one of claims 11 to 18, **characterized in that** two diametrically opposite zones (25) of reduced wall thickness are provided.

20. The bottle according to claim 19, **characterized in that** the two zones (25) of reduced wall thickness are located in the region of the flatter sides of the teat (9).

21. The bottle according to any one of claims 11 to 20, **characterized in that** the teat surface in the lip-contacting region (22) and/or the teat surface of the nipple (23), in particular the zone and/or zones (25) of reduced wall thickness, at least partially have an increased surface roughness of 100 µm at the most, in particular of 50 µm at the most.

22. The bottle according to claim 21, **characterized in that** a surface roughness of approximately 10 µm to approximately 40 µm, preferably of 15 µm to 30 µm, is provided.

23. The bottle according to any one of claims 1 to 22, **characterized in that** the teat (9) is an injection-molded part.

24. The bottle according to any one of claims 1 to 23, **characterized in that** the teat (9) is made of a thermoplastic elastomer.

25. The bottle according to any one of claims 1 to 23, **characterized in that** the teat (9) is made of latex, silicone or a similar elastomeric material.

26. A method of producing a bottle jacket (2), open at both sides, for a bottle according to any one of claims 1 to 25, **characterized in that** the bottle jacket (2) is injection-molded from a polyolefin, in particular of polypropylene.

27. The method according to claim 26, **characterized in that** for designing the substantially conical bottle jacket (2), the bottle jacket (2) is produced with the aid of a frusto-conical injection mold.

28. The method according to claim 26 or 27, **characterized in that** the bottle jacket (2) is injection-molded from transparent polypropylene, in particular from so-called random-copolymer polypropylene, metallocene-catalyzed polypropylene or the like.

## Revendications

1. Bouteille (1), en particulier biberon, avec un corps (2) de bouteille ouvert des deux côtés, un couvercle de fond (8) avec une valve d'admission d'air (13) étant prévu à une zone d'extrémité (4) côté fond du corps (2) de bouteille, et le corps (2) de bouteille présentant une forme sensiblement conique, s'élargissant d'une zone d'extrémité côté tétine vers sa zone d'extrémité (4) côté fond, et une membrane (14) étant logée dans le couvercle de fond (8) pour former la valve d'admission d'air (13), une bride de fixation (19) de la membrane (14) étant serrée entre la face frontale (4') de la zone d'extrémité (4) côté fond et le couvercle de fond (8), au moins une ouverture d'admission d'air (18) étant prévue dans le couvercle de fond (8), **caractérisée en ce que** la membrane (14) pour la formation de la valve d'admission d'air (13) est réalisée en forme de bague torique à la manière d'une valve à air, et **en ce qu'**une tétine (9) est fixée à la zone d'extrémité côté tétine opposée à la zone d'extrémité côté fond, laquelle tétine comporte un tronc (21) et une téterelle (23) au-dessus d'une zone d'appui des lèvres (22) adjacente au tronc, l'épaisseur de paroi du tronc (21) de la tétine (9) étant supérieure à l'épaisseur de paroi de la tétine (9) dans la zone d'appui des lèvres (22) et à celle de la téterelle (23).

2. Bouteille selon la revendication 1 ou 2, **caractérisée en ce qu'**à chacune des deux extrémités ouvertes du corps (2) de bouteille est adjacente une zone d'extrémité (3, 4) pourvue d'un filet (5, 6) pour la fixation d'un couvercle (7, 8).

3. Bouteille selon la revendication 2, **caractérisée en ce qu'**une tétine (9) est fixée au moyen d'un couvercle à épaulement (7) sur la zone d'extrémité (3) de moindre diamètre, une bride de tétine (10) étant serrée entre le couvercle à épaulement (7) et une face frontale (3') de la zone d'extrémité (3) par vissage du couvercle à épaulement (7) sur le corps (2) de bouteille.

4. Bouteille selon la revendication 2 ou 3, **caractérisée en ce qu'**un couvercle de fond (8) avec une valve d'admission d'air (13) est vissé sur la zone d'extrémité (4) côté fond du corps (2) de bouteille.

5. Bouteille selon l'une des revendications 1 à 4, **caractérisée en ce que** la membrane (14) présente une forme correspondant à la forme de godet du couvercle de fond (8).

6. Bouteille selon l'une des revendications 1 à 5, **caractérisée en ce que** la membrane (14) présente un diamètre intérieur d'au moins 15 mm, avantageusement d'environ 30 mm.

7. Bouteille selon l'une des revendications 1 à 6, **caractérisée en ce que** le couvercle de fond (8) est en forme de calotte avec une légère élévation centrale (16).

8. Bouteille selon l'une des revendications 1 à 7, **caractérisée en ce que** la parte d'extrémité intérieure (20) de la membrane (14) en forme de bague torique repose contre l'élévation centrale (16) du couvercle de fond (8).

9. Bouteille selon l'une des revendications 1 à 8, **caractérisée en ce que** la membrane (14) est mise en place sous contrainte dans le couvercle de fond (8).

10. Bouteille selon l'une des revendications 1 à 9, **caractérisée en ce que** le tronc (21) présente une épaisseur de paroi sensiblement comprise entre 2,00 mm et 2,50 mm, en particulier égale à 2,25 mm, et **en ce que** la téterelle (23) ou la zone d'appui des lèvres (22) présentent une épaisseur de paroi sensiblement comprise entre 1,20 mm et 1,50 mm, en particulier égale à 1,35 mm.

11. Bouteille selon l'une des revendications 1 à 10, **caractérisée en ce qu'**au moins une zone (25) est prévue dans la zone d'appui des lèvres (22), dont l'épaisseur de paroi est inférieure à l'épaisseur de paroi du reste de la zone d'appui des lèvres (22).

12. Bouteille selon la revendication 11, **caractérisée en ce que** la zone (25) présente une épaisseur de paroi sensiblement comprise entre 1,30 mm et 1,60 mm, en particulier égale à 1,45 mm.

13. Bouteille selon la revendication 11 ou 12, **caractérisée en ce que** la zone (25) de moindre épaisseur de paroi s'étend jusque dans la téterelle (23).

14. Bouteille selon la revendication 13, **caractérisée en ce que** la zone (25) présente un aspect sensiblement triangulaire.

15. Bouteille selon l'une des revendications 11 à 14, **caractérisée en ce que** la zone (25) de moindre épaisseur de paroi est renforcée par au moins une nervure de renforcement (26).

16. Bouteille selon la revendication 15, **caractérisée en ce que** la nervure de renforcement (26) est prévue sur la face intérieure de la tétine (9) au niveau de la zone (25) de moindre épaisseur de paroi.

17. Bouteille selon la revendication 15 ou 16, **caractérisée en ce que** la nervure de renforcement (26) s'étend jusque dans la téterelle (23).

18. Bouteille selon l'une des revendications 1 à 17, **caractérisée en ce que** la téterelle (23) présente une section transversale sensiblement ovale, le tronc (22) présentant par contre une section transversale circulaire.

19. Bouteille selon l'une des revendications 11 à 18, **caractérisée en ce que** deux zones (25) de moindre épaisseur de paroi, diamétralement opposées l'une à l'autre, sont prévues.

20. Bouteille selon la revendication 19, **caractérisée en ce que** les deux zones (25) de moindre épaisseur de paroi sont disposées au niveau des faces aplaties de la téterelle (9).

21. Bouteille selon l'une des revendications 11 à 20, **caractérisée en ce que** la surface de tétine dans la zone d'appui des lèvres (22) ou la surface de tétine au niveau de la téterelle (23), en particulier la zone ou les zones (25) de moindre épaisseur de paroi, présentent au moins partiellement une rugosité de surface accrue de 100 µm au maximum, en particulier de 50 µm au maximum.

22. Bouteille selon la revendication 21, **caractérisée en ce qu'**il est prévu une rugosité de surface comprise sensiblement entre 10 µm et 40 µm, préférentiellement entre 15 µm et 30 µm.

23. Bouteille selon l'une des revendications 1 à 22, **caractérisée en ce que** la tétine (9) est une pièce moulée par injection.

24. Bouteille selon l'une des revendications 1 à 23, **caractérisée en ce que** la tétine (9) est en élastomère thermoplastique.

25. Bouteille selon l'une des revendications 1 à 23, **caractérisée en ce que** la tétine (9) est en latex, en silicone ou en matériau élastomère analogue.

26. Procédé de fabrication d'un corps (2) de bouteille ouvert des deux côtés pour une bouteille selon l'une des revendications 1 à 25, **caractérisé en ce que** le corps (2) de bouteille est en polyoléfine injecté, en particulier en polypropylène injecté.

27. Procédé selon la revendication 26, **caractérisé en ce que** pour la réalisation du corps (2) de bouteille sensiblement conique, le corps (2) de bouteille est fabriqué à l'aide d'un moule à injection tronconique.

28. Procédé selon la revendication 26 ou 27, **caractérisé en ce que** le corps (2) de bouteille est fabriqué par injection de polypropylène transparent, en particulier copolymère de polypropylène dit aléatoire, en polypropylène catalysé par métallocène, ou similaire.
